# EUROPEAN PATENT SPECIFICATION

(11) **EP 4 375 033 B1**
(45) Date of publication and mention of the grant of the patent: **05.11.2025**
(21) Application number: 22209907.9
(22) Date of filing: 28.11.2022
(51) Int. Cl.: B26D 1/00, B26D 1/38, B26D 7/26, C10L 5/36, C10L 5/44

(54) **TOOL, DEVICE AND METHOD FOR THE PRODUCTION OF SOLID WOOD PELLETS**
WERKZEUG, VORRICHTUNG UND VERFAHREN ZUR HERSTELLUNG VON MASSIVHOLZPELLETS UND MASSIVHOLZPELLETS
OUTIL, DISPOSITIF ET PROCÉDÉ DE FABRICATION DE GRANULÉS DE BOIS MASSIF ET GRANULÉS DE BOIS MASSIF

(43) Date of publication of application: 29.05.2024
(73) Proprietor: Labek, Michael, 6330 Kufstein (AT)
(72) Inventor: Labek, Michael, 6330 Kufstein (AT)
(74) Representative: Flach Bauer & Partner Patentanwälte mbB

(56) References cited:
- WO-A1-00/74908
- CH-A- 81 316
- DE-A1- 102006 036 374

## Description

### Field of the invention

The present invention relates to a cutting tool, a cutting device and a method for the production of solid wood pellets.

### Background

Pellet fuels (or pellets) are biofuels typically made from compressed organic matter (biomass). Suited biomass for pellet production stems e.g. from industrial waste and co-products, food waste, agricultural residues, energy crops, and/or untreated lumber.

Wood pellets are the most common type of pellet fuel and are generally made from compacted sawdust and related industrial wastes from the milling of lumber, manufacture of wood products and furniture, and construction. Other industrial waste sources include empty fruit bunches, palm kernel shells, coconut shells, and tree tops and branches discarded during logging operations.

Pellets are widely used as fuels for power generation, commercial or residential heating, and cooking. Pellets are extremely dense and can be produced with a low moisture content (below 10%) that allows them to be burned with a very high combustion efficiency. Further, their regular geometry and small size allow automatic feeding with very fine calibration, compared to other bio fuels, such as wood chips. E.g. pellets can be fed to a burner by auger feeding or by pneumatic conveying. Their high density also permits compact storage and transport over long distance.

A broad range of pellet stoves, central heating furnaces, and other heating appliances have been developed and are commonly used. With the ongoing surge in the price of fossil fuels, the demand for pellet heating has increased in Europe and North America, and a sizable industry is emerging.

However, as conventional pellets are based on compressed and pre-dried biomass, the pellet production is reserved for large-scale industrial plants. This means, that the source biomass has to be transported, shredded and dried prior to pellet production. Particularly in the case of lumber, such as rolled lumber, lumber infested by the bark beetle and/or the like cannot be transformed to conventional pellets on the spot, but needs to be transported to a pellet production site.

Transportation, drying, shredding and the pressing process requires a large initial energy expend resulting in an undesirable high CO2e footprint of conventional pellets.

Thus, there is a need in the art for an improved kind of pellets, as well as a device and a method for manufacturing those kind of pellets. Prior art can be found in WO 00/74908 A, CH 81 316A and DE 10 2006 036374A.

WO 00/74908 A1 relates to a chipper knife of an indexable insert type for chippers. The chipper knife has a generally flat body and comprises two opposite main surfaces which are adapted to abut and be retained against seat surfaces of a holder on the tool, two cutting edges which are each formed by single or double bevelling from one main surface and from both of the main surfaces, respectively, and means for preventing the chipper knife from being pressed into and extracted from the knife holder.

### Summary

The object is achieved by a cutting tool according to claim 1, a cutting device according to claim 9 and a method for cutting solid wood pallets according to claim 14. Further aspects are given in the dependent claims.

Particularly, the object is achieved by a cutting tool for the production of solid wood pellets. The cutting tool is adapted to be mounted on a cutter block (e.g. a cutter drum, a cutter disk, and/or the like) of a cutting device, such as a drum cutter or a chip cutter. Hence, for cutting solid wood pellets, the cutting tool is moved by a piece of solid wood (solid wood part). These solid wood parts can be naturally grown, such as trunks, or branches. Likewise, the solid wood parts can be recycling material, such as beams, lathes or boards e.g. obtained from demolition work.

The cutting tool includes a two-sided cutting edge having an upper cutting edge side and a lower cutting edge side. It is to be understood that the terms "upper cutting edge side" and "lower cutting edge side" do not express an actual orientation of the tool. Rather, the tool can be used in any orientation. The terms rather denote, different sides of the two-sided cutting edge, that enclose a certain angle (edge angle). When in use, the upper cutting edge side is oriented towards the piece of solid wood. The lower cutting edge side faces away from the piece of solid wood.

The edge angle may be chosen depending on the diameter of a cutter block (e.g. a cutter drum, a cutter disk) of the cutting device, the cutting tool is intended for and/or depending on the desired cutting depth. Further, the edge angle may be chosen depending on the type of wood to be cut. For cutting hardwood, e.g. a steeper edge angle may be chosen, compared to a softwood cutting tool.

The lower cutting edge side includes multiple pellet forming ribs (at least two), sandwiching a respective pellet forming groove. It is to be understood, that multiple pellet forming grooves can be arranged side by side, each sandwiched between respective pellet forming ribs. The number of pellet forming grooves corresponds to the number of pellets being cut in parallel. Depending on the width of the cutting tool, at least 10 pellets, at least 50 pellets, or at least 80 pellets, or at least 100 pellets, or at least 120 pellets can be cut in parallel. The upper cutting edge side and the lower cutting edge side are formed, so that upon cutting a solid wood part, the upper cutting edge side pre-forms the solid wood part and the lower cutting edge side cuts multiple solid wood pellets. With the pre-forming of the solid wood part at least one side of the pellets being cut with the next cut can already be formed.

Depending on the intended cross-sectional shape of the pellets, two cuts may be sufficient to cut multiple pellets in parallel. This is the case for pellets having a cross-section, that can be aligned without interspaces, such as a triangular cross-section, a rectangular cross-section or a hexagonal cross-section. This type of pellets can be cut with a single type of cutting tool.

In case the intended cross-sectional shape of the pellets leads to interspaces, an intermediate cut may be necessary to cut out the respective interspaces. Then, at least three cuts may be required to cut multiple pellets in parallel, wherein the first and third cut may be done with a first type of cutting tool and the second cut with a second type of cutting tool. The intermediate cut may lead to a different, second type of pellets, having different cross-sectional shape as the pellets cut with the first/third cut. For example, a two-sided cutting edge of a first type of cutting tool may be shaped so as to cut pellets having a substantially circular (or octagonal) cross-section. A two-sided cutting edge of a second type of cutting tool may be shaped so as to cut pellets having a substantially square cross-section. Thus, the solid wood part can be cut into pellets, almost without offcut parts.

The cutting tool allows for the production of solid wood pellets, directly from a solid wood part. Hence, method steps such as shredding and pressing can be omitted, compared to the production of conventional pellets. Further, the cutting tool can be operated e.g. in a drum cutter or a disk cutter. Hence, the solid wood pellet production can be performed locally (e.g. in a forest, or at a demolition site) and no transportation of solid wood parts to a pellet production site is required. Summarizing, it is possible to produce solid wood pellets with reduced CO2e emissions, compared to conventional pellets.

The cutting tool may further include a pellet abutment face, being arranged on a lower side of the cutting tool and being oriented substantially perpendicular to the pellet forming ribs (and accordingly substantially perpendicular to the pellet forming grooves) of the lower cutting edge side. During cutting, the not yet entirely cut pellets will hit the pellet abutment face and according to this impact will break off the solid wood part. Thus, pellets are formed.

Particularly, the pellet forming ribs of the lower cutting edge side may extend from a free tip portion of the two-sided cutting edge to the pellet abutment face, so as to define the length of the pellets to be cut. The pellets may have a length in the range of 0,5 cm to 8 cm, preferably in a range of 1 cm to 7 cm and most preferably in a range of 1 cm to 4 cm. Accordingly, the distance from the free tip portion of the two-sided cutting edge to the pellet abutment face may be in a range of 0,5 cm to 8 cm, or in a range of 1 cm to 7 cm and most preferably in a range of 1 cm to 4 cm.

The upper cutting edge side may include multiple pellet pre-forming ribs sandwiching respective pellet pre-forming grooves, which pre-form the solid wood part upon cutting. With providing respective pre-forming ribs and grooves, at least one side of the pellets being cut with the next cut can be pre-formed in the solid wood part. It is to be understood, that multiple pellet pre-forming grooves can be arranged side by side, each sandwiched between respective pellet pre-forming ribs. The number of pellet pre-forming grooves typically corresponds to the number of pellet forming grooves provided on the lower cutting edge side and therefore to the number of pellets being cut in parallel.

The cutting tool may be a single piece, i.e. integrally formed, or may include multiple (at least two) elements. For example, the cutting tool may include a blade element and at least one bracket element. The blade element is the element including the two-sided cutting edge described above. The bracket element is adapted to be mounted on the cutter block (e.g. a cutter drum, a cutter disk, and/or the like) of the cutting device and is adapted to securely hold the blade element. This allows a facilitated replacement of the blade element, e.g. for sharpening or maintenance work.

The bracket element may also include multiple (at least two) elements. Particularly, the bracket element may include an upper bracket element and a lower bracket element, wherein the upper bracket element and the lower bracket element may be adapted to sandwich and clamp the blade element. Thus, the blade element can be securely held in the bracket element. The clamping can be achieved by respective screws, elastic elements such as springs, and/or other suitable fasteners.

The upper bracket element may include pellet pre-forming ribs sandwiching respective pellet pre-forming grooves, which pre-form the solid wood part upon cutting. Thus, the upper bracket supports the pre-forming achieved by the upper cutting edge side. Particularly, the pre-forming ribs of the upper bracket element may be aligned with respective pellet pre-forming ribs of the upper cutting edge side. The depth of the pellet pre-forming grooves may increase, starting from the free tip portion of the two-sided cutting edge towards an end of the pellet pre-forming grooves opposite to the free tip portion of the two-sided cutting edge. Thus, upon cutting the solid wood part is pre-formed successively by the passing cutting tool, particularly by the passing upper cutting edge side and the passing upper bracket element. This allows for a very high surface quality of the solid wood pellet, resulting in an improved pourability and conveyability.

The lower bracket element may include the pellet abutment face and optionally pellet guiding ribs sandwiching respective pellet guiding grooves, wherein the pellet guiding ribs are aligned with respective pellet forming ribs of the lower cutting edge side. The depth of the pellet forming grooves may increase, starting from the free tip portion of the two-sided cutting edge towards an end of the pellet forming grooves opposite to the free tip portion of the two-sided cutting edge. Thus, upon cutting the pellet is formed successively by the passing cutting tool, particularly by the passing lower cutting edge side and the passing lower bracket element. This allows for a very high surface quality of the solid wood pellet, resulting in an improved pourability and conveyability.

Further, with providing the pellet abutment face on the lower bracket element, the distance between the free tip portion of the two-sided cutting edge to the pellet abutment face can be adjustable, by securing the blade element in different positions in the bracket element. Therefore, pellets of different lengths can be cut with the same tool, depending on the adjusted distance.

The pellet forming ribs and pellet forming grooves of the lower cutting edge side (and respectively the lower bracket element) and optionally the pellet pre-forming ribs and pellet pre-forming grooves of the upper cutting edge side (and respectively the upper bracket element) may be formed so that upon cutting pellets are formed, having one of the following cross sections:
a substantially circular cross section;
a substantially oval cross section;
a substantially triangular cross section;
a substantially rectangular, particularly square, cross section;
a substantially hexagonal cross section, or
a polygonal cross section.

Depending on the cross-sectional shape, offcut can be avoided or at least reduced (e.g. in case of substantially triangular, substantially rectangular or substantially hexagonal cross-sections). Further, different type of cutting tools can be used in the same cutting device, allowing for the production of two different pellet types, e.g. substantially octagonal pellets and substantially rectangular pellets.

The pellet forming ribs and pellet forming grooves (and respective pellet pre-forming ribs and pellet pre-forming grooves) may be formed so that the pellets may have a cross section with an equivalent diameter in the range of 4 mm to 16 mm. The equivalent diameter is the diameter of the largest circle that can be inscribed in the cross-sectional shape of the pellet.

The object is further achieved by a cutting device for the production of solid wood pellets, the cutting device including at least one cutting tool as described above and a cutter block.

The cutter block has at least one cutting tool receptacle, wherein the at least one cutting tool is mounted in the cutting tool receptacle for cutting solid wood pellets. Further, the cutter block is adapted to be driven for cutting a solid wood part into pellets. In particular, the cutter block may be rotated or linearly moved for cutting. In case of a rotational movement, the cutter block may be a cutter drum, particularly a spiral cutter drum, or a cutter disk.

Particularly, the cutter block may have at least two cutting tool receptacles (and accordingly, at least two cutting tools mounted thereon), at least three cutting tool receptacles (and accordingly, at least three cutting tools mounted thereon), at least four cutting tool receptacles (and accordingly, at least four cutting tools mounted thereon), at least five cutting tool receptacles (and accordingly, at least five cutting tools mounted thereon), or at least six cutting tool receptacles (and accordingly, at least six cutting tools mounted thereon). Hence, with one rotation of the cutter block multiple cuts can be performed.

Further, the cutting tools may be arranged in a spiral shape on the cutter block, e.g. a cutter drum or a cutter disk, therefore providing a uniformly distributed cutting force.

Different type of cutting tools may be mounted on a cutter block. For example, a first type of cutting tool may be configured to cut pellets with substantially circular cross-section and to pre-form pellets with substantially rectangular cross-section on the solid wood part. A subsequent, second type of cutting tool may be configured to cut pellets with substantially rectangular cross-section and to pre-form pellets with substantially circular cross-section on the solid wood part.

Further, the cutting tool receptacle may be adjustable, allowing to mount the at least one cutting tool under a desired cutting angle. Hence, the cutting of pellets can be optimized dependent on e.g. the type of the wood to be cut (hardwood, softwood, ...), the quality of the wood to be cut, the moisture of the wood to be cut, and/or the like.

The cutter block may include at least one pellet conveying recess assigned to the at least one cutting tool receptacle. The pellet conveying recess may be adapted to receive and convey pellets being cut by the cutting tool. Thus, cut pellets can be reliably conveyed out of a cutting zone and therefore, the risk of blocking the cutting device can be minimized.

The cutting device may further include a counter blade. The counter blade being a fixed blade, arranged opposite to the two-sided cutting edge of the cutting tool. Thus, the quality of the cut can be increased.

Further, the cutting device may include an in-feed roller for conveying a solid wood part towards the cutter block. The in-feed roller is optionally controlled so as to provide for a predefined and substantially constant feed rate.

Further, an in-feed table for supporting a solid wood part being conveyed towards the cutter block may be provide. The in-feed table may optionally comprise a conveyor belt. The in-feed table facilitates the feeding of the cutting device. In case of a conveyor belt, the conveyor belt may be controlled so as to provide for a predefined and substantially constant feed rate.

Further, a sieving element for separating the cut pellets from waste chips can be provided on a downstream side of the cutter block. In case different types of pellets are cut, the sieving element may be adapted to separate the different types of pellets that are cut.

The cutting device allows for the production of solid wood pellets, directly from a solid wood part. Hence, method steps such as shredding and pressing can be omitted, compared to the production of conventional pellets. Further, the cutting device may be a mobile drum cutter or a disk cutter. Hence, the solid wood pellet production can be performed locally (e.g. in a forest, or at a demolition site) and no transportation of solid wood parts to a pellet production site is required. Summarizing, it is possible to produce solid wood pellets with reduced CO2e emissions, compared to conventional pellets.

Said cutting device may be a portable cutting device, that can e.g. be pulled and driven by a motorized vehicle, such as a tractor, a truck, an unimog, and/or the like. Particularly, the cutting device can be adapted to be coupled to said motorized vehicle by e.g. a power takeoff (PTO) shaft. Thus, the cutting device can be operated locally, e.g. in a forest or at a demolition site.

The object is further achieved by a method for producing solid wood pellets, the method comprising the following steps:
- providing a solid wood part, such as a trunk, a branch, a beam, a lath, or a board;
- providing a cutting device as described above;
- conveying the solid wood part into the cutting device and towards the cutter block;
- cutting the solid wood part into solid wood pellets;
- optionally sieving the cut solid wood pellets, and further
- optionally drying the cut solid wood pellets to a desired residual moisture.

The method allows to achieve the advantages outlined above.

The solid wood pellets obtained by the above method may have a length in the range of 3 cm to 6 cm, and a cross section with an equivalent diameter in the range of 4 mm to 12 mm. Compared to conventional pellets, these solid wood pellets are directly cut from solid wood parts. Hence, they are not built up by pressing smaller particles, such as saw dust and/or the like.

### Brief description of the figures

Further features and advantages will be apparent from the following description as well as the accompanying figures, to which reference is made. The figures show in detail:
- Fig. 1: a schematic perspective view of a cutting device for the production of solid wood pellets;
- Fig. 2: a schematic side view of a cutting device for the production of solid wood pellets;
- Fig. 3: a schematic perspective view of a cutting tool for the production of solid wood pellets;
- Fig. 4: a schematic detailed bottom view of a cutting edge of a cutting tool for the production of solid wood pellets;
- Fig. 5: a detailed side view of a cutting tool for the production of solid wood pellets;
- Fig. 6: a schematic view of a cutting tool, cutting solid wood pellets;
- Figs. 7A to 7C: different cutting lines to be cut by a cutting tool for the production of solid wood pellets, and
- Fig. 8: a schematic perspective view of a further cutting device for the production of solid wood pellets.

### Detailed description of figures

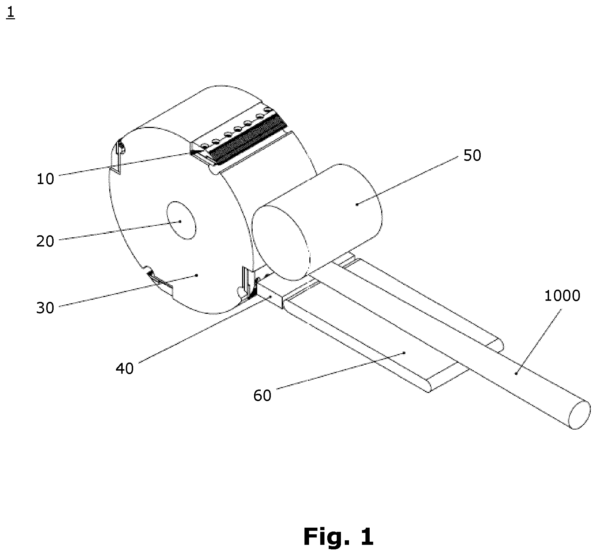

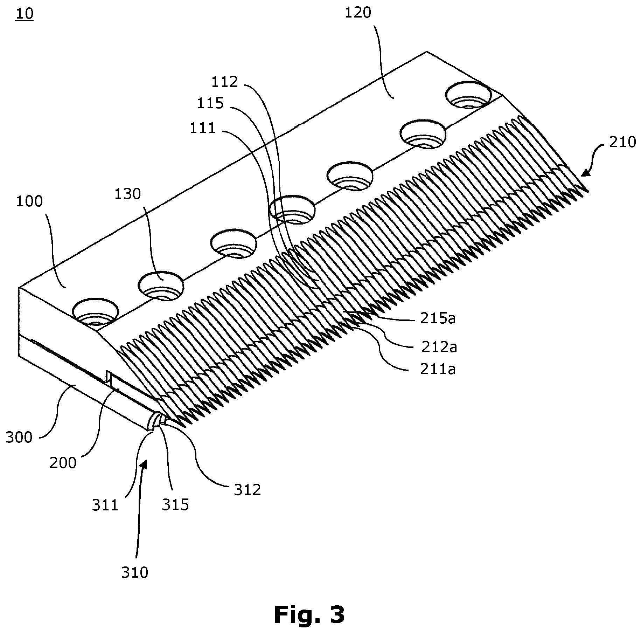

Fig. 1 is a schematic perspective view of a cutting device 1 for the production of solid wood pellets (not shown). The cutting device 1 includes at least one (here four) cutting tool 10. The cutting tool 10 is described in greater detail with regard to Fig. 3.

Further, the cutting device 1 includes a cutter block 30 being a cutter drum in the embodiment shown in Fig. 1. Said cutter drum 30 having at least one cutting tool receptacle 32 (here four), wherein in each cutting tool receptacle 32 a cutting tool 10 is mounted. For cutting a solid wood part 1000 into solid wood pellets the cutter drum 30 is driven, i.e. rotated. For example, the cutter drum 30 can be arranged on a driven shaft, received in shaft receptacle 20. The driven shaft may be directly driven or may be an output shaft of a gearing.

Further, the cutting device 1 may include a motor, such as an electric motor or a combustion engine for driving the cutter block 30, or may be adapted to be coupled to a drive, such as a PTO-shaft of a tractor.

The cutting device 1 shown in Fig. 1 optionally further includes a counter blade 40. The counter blade 40 is a fixed blade, arranged opposite to a two-sided cutting edge of the cutting tool. Hence, the counter blade 40 and the cutting tool cooperate for cutting high quality solid wood pellets.

The cutting device 1 may further include an in-feed roller 50 for conveying a solid wood part 1000 towards the cutter drum 30 and/or an in-feed table 60 for supporting the solid wood part 1000 being conveyed towards the cutter drum 30. The in-feed table 60 may comprise a conveyor belt (not shown) for conveying the solid wood part 1000 towards the cutter drum 30. Here, the conveyor belt and/or the in-feed roller 50 may be controlled so as to provide a substantially constant feed rate.

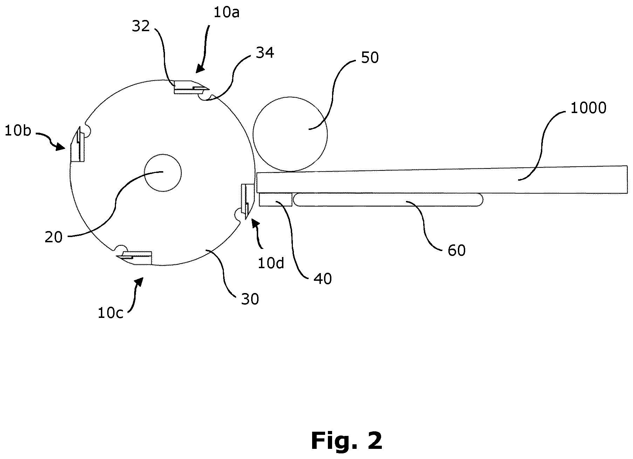

Fig. 2 is a schematic side view of the cutting device 1 for the production of solid wood pellets shown in Fig. 1. As shown, the cutter block (cutter drum 30) can include multiple (here four) cutting tools 10a, 10b, 10c, 10d. Those cutting tools can be of the same type or may be of different types.

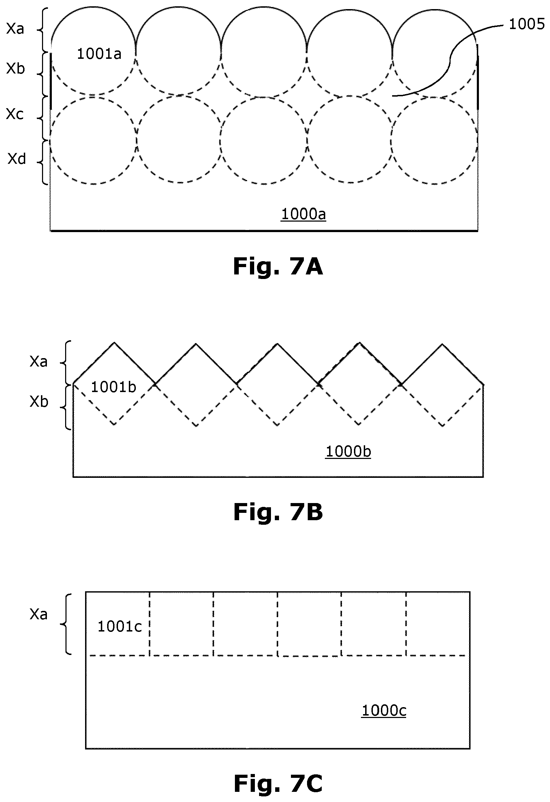

In case a single type of cutting tool is provided, pellets can be cut that have a cross-sectional shape that can be aligned without interspaces, such as a triangular cross-section, a rectangular cross-section (cf. Figs. 7B and 7C). This type of pellets can be cut with a single type of cutting tool.

In case the intended cross-sectional shape of the pellets leads to interspaces, an intermediate cut may be necessary to cut out the respective interspaces. Then, at least three cuts may be required to cut multiple pellets in parallel, wherein the first and third cut may be done with a first type of cutting tool (e.g. 10a, 10c) and the second cut with a second type of cutting tool (e.g. 10b, 10d). The intermediate cut may lead to a different, second type of pellets, having different cross-sectional shape as the pellets cut with the first/third cut. For example, a two-sided cutting edge of a first type of cutting tool 10a, 10c may be shaped so as to cut pellets having a substantially circular (or octagonal) cross-section. A two-sided cutting edge of a second type of cutting tool 10b, 10d may be shaped so as to cut pellets having a substantially square cross-section. Thus, the solid wood part can be cut into pellets, almost without offcut parts.

In case there are offcut parts, those offcut parts can be sieved out after cutting. These offcut parts can e.g. be formed to conventional pellets, or can be used otherwise, e.g. as bedding or mulch.

As further, shown the cutter block 30 may include pellet conveying recesses 34, which are oriented after (in rotation direction) the respective cutting tools 10a, 10b, 10c, 10d mounted in the cutting tool receptacles 32. These pellet conveying recesses are adapted to receive and convey pellets being cut by the cutting tools out of a cutting zone. Hence, the risk of blocking the cutting device can be minimized.

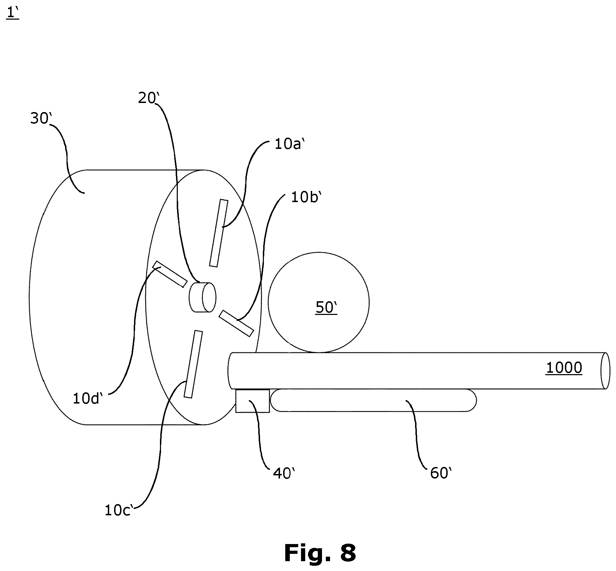

Fig. 3 is a schematic perspective view of a cutting tool 10 for the production of solid wood pellets. This cutting tool 10 may be mounted on a cutter drum 30 of a cutting device shown in Figs. 1 and 2 or on a cutter disk 30' of a cutting device 1' as shown in Fig. 8.

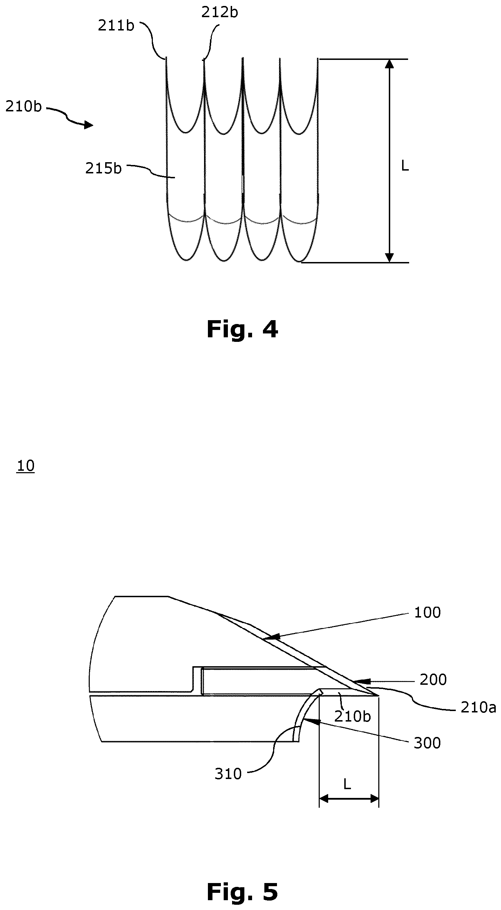

The cutting tool 10 includes a two-sided cutting edge 210 having a free tip portion, that will cut first into a solid wood part. The cutting edge 210 has an upper cutting edge side 210a and a lower cutting edge side 210b, as best seen in the detailed view given in Fig. 5.

As further shown in Fig. 4, which is a schematic detailed bottom view of the cutting edge 210 of the cutting tool 10, the lower cutting edge side 210b includes multiple pellet forming ribs 211b, 212b, sandwiching a respective pellet forming groove 215b. These the pellet forming ribs 211b, 212b of the lower cutting edge side 210b extend from the free tip portion of the two-sided cutting edge 210 to a pellet abutment face 310. Particularly, multiple pellet forming grooves 215b are arranged side by side, each sandwiched between respective pellet forming ribs 211b, 212b. The number of pellet forming grooves 215b corresponds to the number of pellets being cut in parallel.

Further, the cutting tool 10 includes a blade element 200 and at least one bracket element. The bracket element includes an upper bracket element 100 and a lower bracket element 300, wherein the upper bracket element 100 and the lower bracket element 300 are adapted to sandwich and clamp the blade element 200. Further the bracket elements 100, 300 are adapted to be mounted on the cutter block 30, 30' of a respective cutting device 1, 1' and to securely hold the blade element 200. Therefore, through holes 130 may be provided in a main body 120 of upper bracket element 100 and likewise in lower bracket element 300 for mounting (screwing) the bracket element to the respective cutter block 30, 30'.

Here, the blade element 200 includes the two-sided cutting edge 210 and can be exchanged, e.g. for sharpening. Further, in the embodiment shown in Figs. 3 to 5, a pellet abutment face 310 is arranged on a lower side of the cutting tool 10, particularly on the lower bracket element 300. As best seen in Fig. 5, the pellet abutment face 310 is oriented substantially perpendicular to the pellet forming ribs 211b, 212b of the lower cutting edge side 210b. The distance, which can optionally be adjusted, between the free tip portion of the two-sided cutting edge 210 and the pellet abutment face 310 defines the length L of the pellets to be cut.

Further, the upper cutting edge side 210a includes multiple pellet pre-forming ribs 211a, 212a sandwiching a respective pellet pre-forming groove 215a, which pre-form the solid wood part 1000 upon cutting. As shown in Fig. 3, multiple pellet pre-forming grooves 215a are arranged side by side, each sandwiched between respective pellet pre-forming ribs 211a, 212a. The number of pellet pre-forming grooves 215a typically corresponds to the number of pellet forming grooves 215b provided on the lower cutting edge side 210b and therefore to the number of pellets being cut in parallel.

Further, the upper bracket element 100 includes pellet pre-forming ribs 111, 112 sandwiching a respective pellet pre-forming groove 115, which pre-form the solid wood part 1000 upon cutting. The pre-forming ribs 111, 112 of the upper bracket element 100 are here aligned with respective pellet pre-forming ribs 211a, 212a of the upper cutting edge side 210a.

Accordingly, the lower bracket element may include pellet guiding ribs 311, 312 sandwiching respective pellet guiding grooves 315. The pellet guiding ribs 311, 312 are aligned with respective pellet forming ribs 211b, 212b of the lower cutting edge side 210b and guide the pellets to be cut towards the pellet abutment face 310.

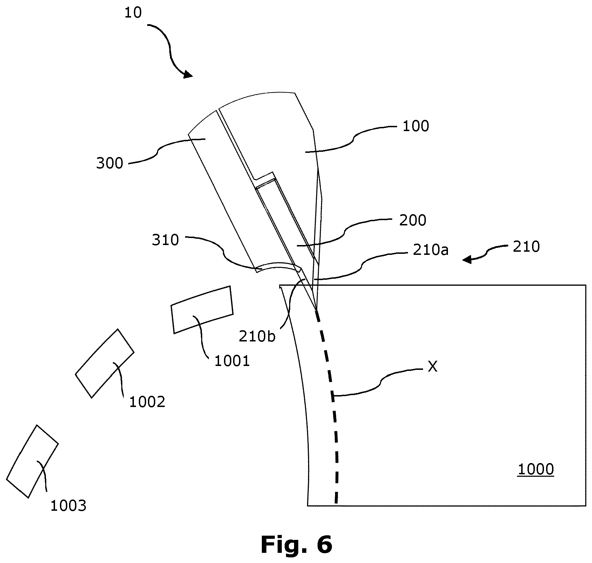

Fig. 6 show a schematic view of a cutting tool 10, cutting solid wood pellets 1001, 1002, 1003 from a solid wood part 1000. For cutting the pellets, the cutting tool 10 is guided along the cutting line X through the solid wood part 1000. Here, cutting tool 10 is provided on a cutter drum. However, it would also be possible to provide the cutting tool 10 on a cutter disk.

During cutting, the free tip portion of the two-sided cutting edge 210 of the blade element 200 comes first into contact with the solid wood part 1000. As the cutting tool 10 follows the cutting line X, defined by the movement (rotation) of the cutter block 30, the upper cutting edge side 210a pre-forms the solid wood part 1000 and the lower cutting edge side 210b cuts multiple solid wood pellets 1001, 1002, 1003. After the not yet entirely cut pellets hit the pellet abutment face 310 of the lower bracket element 300, the not yet entirely cut pellets are deflected and broken from the solid wood part 1000 with a defined length L, corresponding to a distance between the free tip portion of the two-sided cutting edge 210 and the pellet abutment face 310.

Depending on the shape of the pellet pre-forming ribs 211a, 212a and the pellet pre-forming grooves 215a provided on the upper cutting edge side 210a, the solid wood part 1000 can be pre-formed after a first cut as shown in Figs. 7A to 7C (solid line, denoted with Xa). In Fig. 7A, the pellet pre-forming ribs 211a, 212a and the pellet pre-forming grooves 215a of a respective cutting tool are formed so as to provide pellets 1001a with a substantially circular cross-section. In Fig. 7B the pellet pre-forming ribs 211a, 212a and the pellet pre-forming grooves 215a of a respective cutting tool are formed so as to provide pellets 1001bwith a substantially rectangular cross-section. In the case of Fig. 7C, the upper cutting edge side 210a may have no pellet pre-forming ribs 211a, 212a and pellet pre-forming grooves 215a, but may be flush.

In a second cut multiple pellets 1001a, 1000b, 1000c can be cut in parallel, as denoted by the dashed line, denoted with Xb in Figs. 7A to 7C. In Fig. 7A, for this second cut a different type of cutting tool is to be used having differently formed pellet pre-forming ribs 211a, 212a and the pellet pre-forming grooves 215a. Here, the pellet forming ribs 211b, 212b and the pellet forming grooves 215b form a semi-circular shape, to cut pellets 1001a with a substantially circular cross section. In Figs. 7B and 7C, the cutting tool for cutting line Xa can be used for cutting line Xb. Hence, only one type of cutting tool is required.

In Fig. 7A, after having performed the second cut, the first cut can be repeated (dashed line, denoted with Xc). The repeated first cut Xc removes waste chip 1005 and allows to cut pellets 1001a with a substantially circular cross-section with the following cut (dashed line, denoted with Xd). It has to be understood, that dependent on the shape of the pellet pre-forming ribs 211a, 212a and the pellet pre-forming grooves 215a and pellet forming ribs 211b, 212b and the pellet forming grooves 215b of the first and second type of cutting tools used for the pellets depicted in Fig. 7A, the waste chip 1005 can either be offcut, that has to be separated (e.g. sieved out) from the cut pellets or may form a second type of (substantially rectangular) pellets.

Fig. 8 is a schematic perspective view of a cutting device 1' for the production of solid wood pellets (not shown). In contrast to the cutting device 1 shown in Fig. 1, the cutting device 1' includes a disk-shaped cutter block 30.

The cutting device 1' includes at least one (here four) cutting tool 10. Further, the cutting device 1' includes a cutter block 30' being a cutter disk. Said cutter disk 30' having at least one cutting tool receptacle (here four), wherein in each cutting tool receptacle a cutting tool 10a', 10b', 10c', 10d' is mounted. For cutting a solid wood part 1000 into solid wood pellets the cutter disk 30' is driven, i.e. rotated. For example, the cutter disk 30' can be arranged on a driven shaft, received in shaft receptacle 20'. The driven shaft may be directly driven or may be an output shaft of a gearing. Further, the cutting device 1' may include a motor, such as an electric motor or a combustion engine for driving the cutter block, or may be adapted to be coupled to a drive, such as a PTO-shaft of a tractor.

As the cutting device 1 shown in Fig. 1, the cutting device 1' shown in Fig. 8 optionally further includes a counter blade 40'. The counter blade 40' is a fixed blade, arranged opposite to a respective two-sided cutting edge of the cutting tools 10a', 10b', 10c', 10d'. Hence, the counter blade 40' and the cutting tools 10a', 10b', 10c', 10d' cooperate for cutting high quality solid wood pellets.

The cutting device 1' may further include an in-feed roller 50' for conveying a solid wood part 1000 towards the cutter disk 30' and/or an in-feed table 60' for supporting the solid wood part 1000 being conveyed towards the cutter disk 30'. The in-feed table 60' may comprise a conveyor belt (not shown) for conveying the solid wood part 1000 towards the cutter disk 30'. Here, the conveyor belt and/or the in-feed roller 50' may be controlled so as to provide a substantially constant feed rate.

Some of the embodiments contemplated herein are described more fully with reference to the accompanying figures. Other embodiments, however, are contained within the scope of the subject matter disclosed herein. The disclosed subject matter should not be construed as limited to only the embodiments set forth herein; rather, these embodiments are provided by way of example to convey the scope of the subject matter to those skilled in the art.

The present invention may, of course, be carried out in other ways than those specifically set forth herein without departing from essential characteristics of the invention. The present embodiments are to be considered in all respects as illustrative and not restrictive, and all changes coming within the meaning and equivalency range of the appended claims are intended to be embraced therein.

### List of reference signs

- 1: cutting device (drum cutter)
- 1': cutting device (disk cutter)
- 10: cutting tool
- 10a, 10a': cutting tool
- 10b, 10b': cutting tool
- 10c, 10c': cutting tool
- 10d, 10d': cutting tool
- 20, 20': shaft receptacle
- 30: cutter block (drum)
- 30': cutter block (disk)
- 32: cutting tool receptacle
- 34: pellet conveying recess
- 40, 40': counter blade
- 50, 50': in-feed roller
- 60, 60': in-feed table
- 100: upper bracket
- 111: pellet pre-forming rib
- 112: pellet pre-forming rib
- 115: pellet pre-forming groove
- 120: main body

- 200: blade element
- 210: cutting edge
- 210a: upper cutting edge side
- 210b: lower cutting edge side
- 211a: pellet pre-forming rib
- 212a: pellet pre-forming rib
- 215a: pellet pre-forming groove
- 211b: pellet forming rib
- 212b: pellet forming rib
- 215b: pellet forming groove

- 300: lower bracket
- 310: abutting face
- 311: pellet guiding rib
- 312: pellet guiding rib
- 315: pellet guiding groove

- 1000: solid wood part (e.g. trunk or branch)
- 1000a: solid wood part
- 1000b: solid wood part
- 1000c: solid wood part
- 1001: solid wood pellet
- 1001a: solid wood pellets (cross section)
- 1001b: solid wood pellets (cross section)
- 1001c: solid wood pellets (cross section)
- 1002: solid wood pellet
- 1003: solid wood pellet
- 1005: waste chip (offcut or smaller pellet)

- L: pellet length
- X: cutting line
- Xa: cutting line
- Xb: cutting line
- Xc: cutting line
- Xd: cutting line

## Claims

1. A cutting tool (10) for the production of solid wood pellets (1001, 1002, 1003),
the cutting tool (10) being adapted to be mounted on a cutter block (30, 30') of a cutting device (1, 1');
**characterized in that** the cutting tool includes a two-sided cutting edge (210) having an upper cutting edge side (210a) and a lower cutting edge side (210b);
the lower cutting edge side (210b) includes multiple pellet forming ribs (211b, 212b), sandwiching a respective pellet forming groove (215b), wherein
the upper cutting edge side (210a) and the lower cutting edge side (210b) are formed, so that upon cutting a solid wood part (1000), the upper cutting edge side (210a) pre-forms the solid wood part (1000) and the lower cutting edge side (210b) cuts multiple solid wood pellets (1001, 1002, 1003).

2. The cutting tool (10) according to claim 1, further including
a pellet abutment face (310), being arranged on a lower side of the cutting tool and being oriented substantially perpendicular to the pellet forming ribs (211b, 212b) of the lower cutting edge side (210b), wherein
the pellet forming ribs (211b, 212b) of the lower cutting edge side (210b) extend from a free tip portion of the two-sided cutting edge (210) to the pellet abutment face (310), so as to define the length of the pellets (1001, 1002, 1003) to be cut.

3. The cutting tool (10) according to any preceding claim, wherein
the upper cutting edge side (210a) includes multiple pellet pre-forming ribs (211a, 212a) sandwiching a respective pellet pre-forming groove (215a), which pre-form the solid wood part (1000) upon cutting.

4. The cutting tool (10) according to any preceding claim, including a blade element (200) and at least one bracket element (100; 300), wherein
the blade element (200) includes the two-sided cutting edge (210), and wherein the bracket element (100; 300) is adapted to be mounted on the cutter block (30, 30') of the cutting device (1, 1') and to securely hold the blade element (200).

5. The cutting tool (10) according to the preceding claim, wherein
the bracket element (100; 300) includes an upper bracket element (100) and a lower bracket element (300), wherein the upper bracket element (100) and the lower bracket element (300) are adapted to sandwich and clamp the blade element (200).

6. The cutting tool (10) according to the preceding claim, wherein
the upper bracket element (100) includes pellet pre-forming ribs (111, 112) sandwiching a respective pellet pre-forming groove (115), which pre-form the solid wood part (1000) upon cutting, wherein the pre-forming ribs (111, 112) of the upper bracket element (100) may be aligned with respective pellet pre-forming ribs (211a, 212a) of the upper cutting edge side (210a).

7. The cutting tool (10) according to any one of claims 5 or 6, wherein
the lower bracket element (300) includes the pellet abutment face (310), and optionally
pellet guiding ribs (311, 312) sandwiching a respective pellet guiding groove (315), wherein the pellet guiding ribs (311, 312) are aligned with respective pellet forming ribs (211b, 212b) of the lower cutting edge side (210b).

8. The cutting tool (10) according to any preceding claim, wherein the pellet forming ribs (211b, 212b) and pellet forming grooves (215b) of the lower cutting edge side (210b) and optionally the pellet pre-forming ribs (211a, 212a) and pellet pre-forming grooves (215a) of the upper cutting edge side (210a) are formed so that upon cutting pellets are formed, having one of the following cross sections:
a substantially circular cross section;
a substantially oval cross section;
a substantially triangular cross section;
a substantially rectangular, particularly square, cross section;
a substantially hexagonal cross section, or
a polygonal cross section.

9. A cutting device (1) for the production of solid wood pellets (1001, 1002, 1003), the cutting device including
at least one cutting tool (10) according to any preceding claim;
and a cutter block (30, 30'), the cutter block (30, 30') having at least one cutting tool receptacle (32), wherein the at least one cutting tool (10) is mounted in the cutting tool receptacle (32), wherein the
cutter block (30, 30') is adapted to be driven for cutting a solid wood part (1000) into pellets (1001, 1002, 1003).

10. The cutting device (1) according to claim 9, wherein the cutter block is a cutter drum (30), particularly a spiral cutter drum, or a cutter disk (30').

11. The cutting device (1) according to claim 9 or 10, wherein the cutting tool receptacle (32) is adjustable, allowing to mount the at least one cutting tool (10) under a desired cutting angle.

12. The cutting device (1) according to any one of claims 9 to 11, wherein the cutter block (30) includes at least one pellet conveying recess (34) assigned to the at least one cutting tool receptacle (32), the pellet conveying recess (34) being adapted to receive and convey pellets being cut by the cutting tool (10).

13. The cutting device (1) according to any one of claims 9 to 12, further including at least one of
a counter blade (40), the counter blade being a fixed blade, arranged opposite to the two-sided cutting edge (210) of the cutting tool (10);
an in-feed roller (50) for conveying a solid wood part (1000) towards the cutter block (30, 30');
an in-feed table (60) for supporting a solid wood part (1000) being conveyed towards the cutter block (30, 30'), the in-feed table (60) optionally comprising a conveyor belt, and/or
a sieving element for separating the cut pellets (1001, 1002, 1003) from waste chips (1005).

14. Method for producing solid wood pellets, the method comprising the following steps:
providing a solid wood part (1000), such as a trunk, a branch, a beam, a lath, or a board;
providing a cutting device (1) according to any one of claims 9 to 13,
conveying the solid wood part (1000) into the cutting device (1) and towards the cutter block (30, 30');
cutting the solid wood part (1000) into solid wood pellets (1001, 1002, 1003);
optionally sieving the cut solid wood pellets, and further
optionally drying the cut solid wood pellets to a desired residual moisture.

## Patentansprüche

1. Schneidwerkzeug (10) für die Herstellung von Massivholzpellets (1001, 1002, 1003),
wobei das Schneidwerkzeug (10) angepasst ist, um auf einer Messerwelle (30, 30') einer Schneidvorrichtung (1, 1') montiert zu werden;
**dadurch gekennzeichnet, dass** das Schneidwerkzeug eine zweiseitige Schneidkante (210) mit einer oberen Schneidkantenseite (210a) und einer unteren Schneidkantenseite (210b) beinhaltet;
die untere Schneidkantenseite (210b) mehrere pelletausbildende Rippen (211b, 212b) beinhaltet, die eine jeweilige pelletausbildende Rille (215b) schichtenweise anordnen, wobei
die obere Schneidkantenseite (210a) und die untere Schneidekante (210b) derart ausgebildet sind, dass beim Schneiden eines Massivholzteils (1000), die obere Schneidkantenseite (210a) das Massivholzteil (1000) vorformt und die untere Schneidkantenseite (210b) mehrere Massivholzpellets (1001, 1002, 1003) schneidet.

2. Schneidwerkzeug (10) nach Anspruch 1, das ferner beinhaltet:
eine Pelletanlagefläche (310), die an einer unteren Seite des Schneidwerkzeugs angeordnet ist und im Wesentlichen senkrecht zu den pelletausbildenden Rippen (211b, 212b) der unteren Schneidkantenseite (210b) ausgerichtet ist, wobei
sich die pelletausbildenden Rippen (211b, 212b) der unteren Schneidkantenseite (210b) von einem freien Spitzenabschnitt der zweiseitigen Schneidkante (210) zu der Pelletanlagefläche (310) erstrecken, um die Länge der zu schneidenden Pellets (1001, 1002, 1003) zu definieren.

3. Schneidwerkzeug (10) nach einem der vorhergehenden Ansprüche, wobei
die obere Schneidkantenseite (210a) mehrere pelletausbildende Rippen (211a, 212a) beinhaltet, die eine jeweilige Pelletvorformungsrille (215a) schichtenweise anordnen, die das Massivholzteil (1000) beim Schneiden vorformen.

4. Schneidwerkzeug (10) nach einem der vorhergehenden Ansprüche, das ein Klingenelement (200) und wenigstens ein Halterungselement (100; 300) beinhaltet, wobei
das Klingenelement (200) die zweiseitige Schneidkante (210) beinhaltet, und wobei das Halterungselement (100; 300) angepasst ist, um auf der Messerwelle (30, 30') der Vorrichtung (1, 1') montiert zu werden und das Klingenelement (200) sicher zu halten.

5. Schneidwerkzeug (10) nach dem vorhergehenden Anspruch, wobei
das Halterungselement (100; 300) ein oberes Halterungselement (100) und ein unteres Halterungselement (300) beinhaltet, wobei das obere Halterungselement (100) und das untere Halterungselement (300) angepasst sind, um das Klingenelement (200) schichtenweise anzuordnen und dieses einzuklemmen.

6. Schneidwerkzeug (10) nach dem vorhergehenden Anspruch, wobei
das obere Halterungselement (100) Pelletvorformungsrippen (111, 112) beinhaltet, die eine jeweilige Pelletvorformungsrille (115) schichtenweise anordnen, die das Massivholzteil (1000) beim Schneiden vorformen, wobei die Vorformungsrippen (111, 112) des oberen Halterungselements (100) an den jeweiligen Pelletvorformungsrippen (211a, 212a) der oberen Schneidkantenseite (210a) ausgerichtet werden können.

7. Schneidwerkzeug (10) nach einem der Ansprüche 5 oder 6, wobei
das untere Halterungselement (300) die Pelletanlagefläche (310) beinhaltet, und optional
Pelletführungsrippen (311, 312), die eine jeweilige Pelletführungsrille (315) schichtenweise anordnen, wobei die Pelletführungsrippen (311, 312) an jeweiligen pelletausbildenden Rippen (211b, 212b) der unteren Schneidkantenseite (210b) ausgerichtet sind.

8. Schneidwerkzeug (10) nach einem der vorhergehenden Ansprüche, wobei die pelletausbildenden Rippen (211b, 212b) und die pelletausbildenden Rillen (215b) der unteren Schneidkantenseite (210b) und optional die pelletausbildenden Rippen (211a, 212a) und pelletausbildenden Rillen (215a) der oberen Schneidkantenseite (210a) derart ausgebildet sind, dass beim Schneiden Pellets ausgebildet werden, die einen der folgenden Querschnitte aufweisen:
einen im Wesentlichen kreisförmigen Querschnitt;
einen im Wesentlichen ovalen Querschnitt
einen im Wesentlichen dreieckigen Querschnitt;
einen im Wesentlichen rechteckigen, insbesondere quadratischen, Querschnitt;
einen im Wesentlichen sechseckigen Querschnitt, oder
einen polygonalen Querschnitt.

9. Schneidvorrichtung (1) für die Herstellung von Massivholzpellets (1001, 1002, 1003), wobei die Schneidvorrichtung beinhaltet:
wenigstens ein Schneidwerkzeug (10) nach einem der vorhergehenden Ansprüche;
und eine Messerwelle (30, 30'), wobei die Messerwelle (30, 30') wenigstens eine Schneidwerkzeugaufnahme (32) aufweist, wobei das wenigstens eine Schneidwerkzeug (10) in der Schneidwerkzeugaufnahme (32) montiert ist, wobei die
Messerwelle (30, 30') angepasst ist, um zum Schneiden eines Massivholzteils (1000) in Pellets (1001, 1002, 1003) angetrieben zu werden.

10. Schneidvorrichtung (1) nach Anspruch 9, wobei die Messerwalze eine Messertrommel (30), insbesondere eine Spiralmessertrommel, oder eine Messerscheibe (30') ist.

11. Schneidvorrichtung (1) nach Anspruch 9 oder 10, wobei die Schneidwerkzeugaufnahme (32) anpassbar ist, um zu ermöglichen, dass das wenigstens eine Schneidwerkzeug (10) unter einem gewünschten Schneidwinkel montiert wird.

12. Schneidvorrichtung (1) nach einem der Ansprüche 9 bis 11, wobei die Messerwalze (30) wenigstens eine Pelletförderaussparung (34) beinhaltet, die der wenigstens einen Schneidwerkzeugaufnahme (32) zugewiesen ist, wobei die Pelletförderaussparung (34) angepasst ist, um Pellets, die durch das Schneidwerkzeug (10) geschnitten werden, aufzunehmen und zu fördern.

13. Schneidvorrichtung (1) nach einem der Ansprüche 9 bis 12, ferner wenigstens eines beinhaltend von:
einer Gegenklinge (40), wobei die Gegenklinge eine fixierte Klinge ist, die gegenüber der zweiseitigen Schneidkante (210) des Schneidwerkzeugs (10) angeordnet ist;
einer Vorschubwalze (50) zum Fördern eines Massivholzteils (1000) zu der Messerwalze (30, 30');
einem Vorschubtisch (60) zum Unterstützen eines Massivholzteils (1000), das zu der Messerwalze (30, 30') gefördert wird, wobei der Vorschubtisch (60) optional ein Förderband umfasst, und/oder
einem Siebelement zum Trennen der geschnittenen Pellets (1001, 1002, 1003) von Abfallspänen (1005).

14. Verfahren zum Herstellen von Massivholzpellets, wobei das Verfahren die folgenden Schritte umfasst:
Bereitstellen eines Massivholzteils (1000), wie eines Stammes, eines Astes, eines Balkens, einer Latte oder eines Brettes;
Bereitstellen einer Schneidvorrichtung (1) nach einem der Ansprüche 9 bis 13,
Fördern des Massivholzteils (1000) in die Schneidvorrichtung (1) und zu der Messerwalze (30, 30');
Schneiden des Massivholzteils (1000) in Massivholzpellets (1001, 1002, 1003);
optionales Sieben der geschnittenen Massivholzpellets und ferner
optionales Trocknen der geschnittenen Massivholzpellets auf eine gewünschte Restfeuchtigkeit.

## Revendications

1. Outil de coupe (10) pour la production de granulés de bois massif (1001, 1002, 1003),
l'outil de coupe (10) étant adapté à être monté sur un bloc de coupe (30, 30') d'un dispositif de coupe (1, 1') ;
**caractérisé en ce que** l'outil de coupe présente un tranchant à deux côtés (210) ayant un côté de tranchant supérieur (210a) et un côté de tranchant inférieur (210b) ;
le côté de tranchant inférieur (210b) présente de multiples nervures de formation de granulés (211b, 212b) prenant en sandwich une rainure de formation de granulés (215b) respective,
ledit côté de tranchant supérieur (210a) et ledit côté de tranchant inférieur (210b) étant formés de telle façon que, lors de la coupe d'une pièce de bois massif (1000), le côté de tranchant supérieur (210a) préforme la pièce de bois massif (1000) et le côté de tranchant inférieur (210b) coupe de multiples granulés de bois massif (1001, 1002, 1003).

2. Outil de coupe (10) selon la revendication 1, présentant en outre :
une face de butée de granulés (310), agencée sur un côté inférieur de l'outil de coupe et orientée sensiblement perpendiculairement aux nervures de formation de granulés (211b, 212b) du côté de tranchant inférieur (210b) ;
lesdites nervures de formation de granulés (211b, 212b) du côté de tranchant inférieur (210b) s'étendant depuis une partie de pointe libre du tranchant à deux côtés (210) jusqu'à la face de butée de granulés (310), définissant la longueur des pastilles (1001, 1002, 1003) à couper.

3. Outil de coupe (10) selon l'une quelconque des revendications précédentes, dans lequel
le côté de tranchant supérieur (210a) présente plusieurs nervures de préformage de granulés (211a, 212a), prenant en sandwich une rainure de préformage de granulés (215a) respective, qui préforment la pièce de bois massif (1000) lors de la coupe.

4. Outil de coupe (10) selon l'une quelconque des revendications précédentes, présentant un élément de lame (200) et au moins un élément de support (100 ; 300) ;
ledit élément de lame (200) présentant le tranchant à deux côtés (210), et ledit élément de support (100 ; 300) étant adapté à être monté sur le bloc de coupe (30, 30') du dispositif de coupe (1, 1') et à maintenir solidement l'élément de lame (200).

5. Outil de coupe (10) selon la revendication précédente, dans lequel
l'élément de support (100 ; 300) présente un élément de support supérieur (100) et un élément de support inférieur (300), l'élément de support supérieur (100) et l'élément de support inférieur (300) étant adaptés à prendre en sandwich et à abloquer l'élément de lame (200).

6. Outil de coupe (10) selon la revendication précédente, dans lequel
l'élément de support supérieur (100) présente des nervures de préformage de granulés (111, 112), prenant en sandwich une rainure de préformage de granulés (115) respective, qui préforment la pièce de bois massif (1000) lors de la coupe, lesdites nervures de préformage (111, 112) de l'élément de support supérieur (100) pouvant être alignées sur les nervures de préformage de granulés (211a, 212a) respectives du côté de tranchant supérieur (210a).

7. Outil de coupe (10) selon l'une quelconque des revendications 5 et 6,
dans lequel l'élément de support inférieur (300) présente la face de butée de granulés (310), et éventuellement
des nervures de guidage de granulés (311, 312) prenant en sandwich une rainure de guidage de granulés (315) respective, lesdites nervures de guidage de granulés (311, 312) étant alignées sur les nervures de formation de granulés (211b, 212b) respectives du côté de tranchant inférieur (210b).

8. Outil de coupe (10) selon l'une quelconque des revendications précédentes, dans lequel les nervures de formation de granulés (211b, 212b) et les rainures de formation de granulés (215b) du côté de tranchant inférieur (210b) et, éventuellement, les nervures de préformage de granulés (211a, 212a) et les rainures de préformage de granulés (215a) du côté de tranchant supérieur (210a) sont formées de telle façon que, lors de la coupe, il soit formé des granulés présentant l'une des sections transversales suivantes :
une section transversale sensiblement circulaire,
une section transversale sensiblement ovale,
une section transversale sensiblement triangulaire,
une section transversale sensiblement rectangulaire, notamment carrée,
une section transversale sensiblement hexagonale, ou
une section transversale polygonale.

9. Dispositif de coupe (1) pour la production de granulés de bois massif (1001, 1002, 1003), le dispositif de coupe présentant :
au moins un outil de coupe (10) selon l'une quelconque des revendications précédentes, et
un bloc de coupe (30, 30'), le bloc de coupe (30, 30') comportant au moins un réceptacle d'outil de coupe (32), ledit au moins un outil de coupe (10) étant monté dans le réceptacle d'outil de coupe (32), et
le bloc de coupe (30, 30') étant adapté à être entraîné pour couper une pièce de bois massif (1000) en granulés (1001, 1002, 1003).

10. Dispositif de coupe (1) selon la revendication 9, dans lequel le bloc de coupe est un tambour de coupe (30), notamment un tambour de coupe en spirale, ou un disque de coupe (30').

11. Dispositif de coupe (1) selon la revendication 9 ou 10, dans lequel le réceptacle d'outil de coupe (32) est réglable, permettant de monter l'au moins un outil de coupe (10) sous un angle de coupe souhaité.

12. Dispositif de coupe (1) selon l'une quelconque des revendications 9 à 11, dans lequel le bloc de coupe (30) présente au moins un évidement de transport de granulés (34) associé à l'au moins à un réceptacle d'outil de coupe (32), l'évidement de transport de granulés (34) étant adapté à recevoir et à transporter des granulés coupés par l'outil de coupe (10).

13. Dispositif de coupe (1) selon l'une quelconque des revendications 9 à 12, présentant en outre :
une contre-lame (40), la contre-lame étant une lame fixe, agencée à l'opposé du tranchant à deux côtés (210) de l'outil de coupe (10),
un rouleau d'amenée (50) pour transporter une pièce de bois massif (1000) vers le bloc de coupe (30, 30'),
une table d'amenée (60) pour supporter une pièce de bois massif (1000) transportée vers le bloc de coupe (30, 30'), la table d'amenée (60) comprenant éventuellement une bande transporteuse, et/ou
un élément de tamisage pour séparer les granulés coupés (1001, 1002, 1003) des copeaux de déchets (1005).

14. Procédé de production de granulés de bois massif, le procédé comprenant les étapes suivantes consistant à :
fournir une pièce de bois massif (1000), telle qu'un tronc, une branche, une poutre, une latte ou une planche,
fournir un dispositif de coupe (1) selon l'une quelconque des revendications 9 à 13,
transporter la pièce de bois massif (1000) dans le dispositif de coupe (1) et vers le bloc de coupe (30, 30'),
couper la pièce de bois massif (1000) en granulés de bois massif (1001, 1002, 1003),
tamiser éventuellement les granulés de bois massif coupés, et en outre
sécher éventuellement les granulés de bois massif coupés jusqu'à l'humidité résiduelle souhaitée.
